# EUROPÄISCHE PATENTSCHRIFT

(11) **EP 2 918 521 B1**
(45) Veröffentlichungstag und Bekanntmachung des Hinweises auf die Patenterteilung: **21.06.2017**
(21) Anmeldenummer: 15151137.5
(22) Anmeldetag: 14.01.2015
(51) Int. Cl.: B65G 21/14, B65G 41/02, B65G 21/12, B65G 47/52

(54) **System mit Teleskopförderer und Verfahren hierfür**
System with telescopic conveyor and method for same
Système doté de convoyeur télescopique et son procédé

(30) Priorität: 11.03.2014 DE 102014103202
(43) Veröffentlichungstag der Anmeldung: 16.09.2015
(73) Patentinhaber: Deutsche Post AG, 53113 Bonn (DE); Sovex Limited, Prenton, Wirral CH43 3EA (GB)
(72) Erfinder: Hartmann, Bernd, 53501 Grafschaft-Leimersdorf (DE); Henderson, Martin, Wallasey, Merseyside, CM455DN (GB)
(74) Vertreter: Cohausz & Florack

(56) Entgegenhaltungen:
- EP-A1- 1 426 312
- EP-A1- 2 563 695
- CN-U- 202 609 477
- DE-A1-102010 005 267
- JP-A- 2010 242 382
- JP-U- S51 115 377
- US-A1- 2008 035 453

## Beschreibung

### GEBIET DER ERFINDUNG

Die vorliegende Erfindung betrifft ein System mit Teleskopförderer und ein Verfahren für ein solches System.

### HINTERGRUND DER ERFINDUNG

Teleskopförderer sind aus der Praxis für eine Vielzahl von Einsatzgebieten bekannt. Sie können insbesondere als Teleskopgurtförderer, aber beispielsweise auch als Teleskoprollenförderer ausgebildet sein.

Ein Teleskopförderer ermöglicht die Überbrückung variabler Distanzen auf einem Transportweg von Stückgütern. Der Teleskopförderer kann hierzu ein Tragegerüst sowie mindestens ein in dem Tragegerüst teleskopartig verfahrbar gelagertes Teleskopsegment umfassen. Bei einem Teleskopgurtförderer kann dann beispielsweise ein Förderband mittels Umlenkrollen, Spannrollen und Antriebsrollen so an dem Tragegerüst und den Teleskopsegmenten angebracht sein, dass bei unterschiedlichen Ausfahrstadien der Teleskopsegmente jeweils ein durchgehendes, gespanntes und antreibbares Transportband für einen Transport von Stückgütern zur Verfügung steht. Eine entsprechende Anordnung ist beispielsweise in der Patentschrift DE 10 2004 063 704 B4 beschrieben.

Stückgüter können beispielsweise von einer Sortieranlage an einem festen Ort bereitgestellt werden, um auf die Ladefläche eines Lastkraftwagens oder eines Trailers verbracht zu werden. Auch wenn sich der Zugang zu der Ladefläche jeweils im Wesentlichen unmittelbar vor einer Ausgabestelle der Sortieranlage befindet, so können sich doch leichte Unterschiede in der Distanz zwischen der Ausgabestelle und der Ladefläche ergeben. Außerdem müssen auf der Ladefläche in der Regel zunächst Bereiche weiter hinten und dann Bereiche weiter vorne beladen werden. Entsprechendes gilt, wenn Stückgüter von der Ladefläche eines Lastkraftwagens oder Trailers entladen und einer ortsfesten Fördervorrichtung zur weiteren Beförderung zugeführt werden sollen. Aufgrund der Teleskopeigenschaft eines Teleskopförderers können solche unterschiedlichen Distanzen mit einem einzigen Teleskopförderer überbrückt werden. Durch Teleskopförderer kann somit die Beförderung von Stückgütern beschleunigt und Bedienpersonal bei Be- und Entladevorgängen entlastet werden. Die Druckschrift US 2008/0035453 A1 beschreibt einen Teleskopförderer mit einem Entladeabschnitt, der für eine eingezogene Position unter einen Beladeabschnitt des Teleskopförderers geschoben werden kann. Es können Führungsschienen und Führungsbolzen vorgesehen sein, um den Entladeabschnitt und den Beladeabschnitt auszurichten. Der gesamte Teleskopförderer kann verfahrbar sein.

### ALLGEMEINE BESCHREIBUNG EINIGER BEISPIELHAFTER AUSFÜHRUNGSFORMEN DER ERFINDUNG

Eine der Aufgaben der Erfindung besteht darin, einen noch flexibleren Einsatz von Teleskopförderern zu ermöglichen.

Die Aufgabe wird gelöst durch ein System gemäß Anspruch 1 und ein Verfahren gemäß Anspruch 15. Weitere Ausführungsformen sind den abhängigen Ansprüchen zu entnehmen. Das erfindungsgemäße System umfasst einen Teleskopförderer und mindestens ein Führungselement. Das mindestens eine Führungselement weist Befestigungskomponenten auf, die dazu eingerichtet sind, das mindestens eine Führungselement an einem Ort zu fixieren. Der Teleskopförderer und das mindestens eine Führungselement sind außerdem derart zusammenwirkend ausgebildet, dass der Teleskopförderer geführt von dem mindestens einen Führungselement in und/oder gegen Förderrichtung des Teleskopförderers zwischen einer Parkposition und einer Betriebsposition des Teleskopförderers bewegbar ist, wenn das mindestens eine Führungselement mittels der Befestigungselemente an einem Ort fixiert ist. Das entsprechende Verfahren zur Nutzung eines oben genannten Systems umfasst die nachfolgenden Aktionen, wobei das System einen Teleskopförderer und mindestens ein Führungselement aufweist und wobei das mindestens eine Führungselement mittels Befestigungskomponenten an einem Ort fixiert ist: Bewegen des Teleskopförderers in oder gegen Förderrichtung des Teleskopförderers von einer Parkposition in eine Betriebsposition unter Führung des Teleskopförderers durch das mindestens eine Führungselement, um einen Betrieb des Teleskopförderers zu ermöglichen, und Bewegen des Teleskopförderers in oder gegen Förderrichtung des Teleskopförderers von einer Betriebsposition in eine Parkposition unter Führung des Teleskopförderers durch das mindestens eine Führungselement, um einen Raum freizugeben, der von dem Teleskopförderer in der Betriebsposition belegt wird.

Die Erfindung basiert auf der Überlegung, dass Teleskopförderer in einigen Anlagen zwar in bestimmten Situationen einen nützlichen Dienst erweisen können, aber nicht durchgehend genutzt werden. In diesem Fall können die Teleskopförderer den Betrieb der Anlage unter Umständen behindern oder anderweitig nutzbaren Raum belegen.

So könnte eine Zuführeinrichtung einer Anlage zu bestimmten Zeiten eine größere Menge an Stückgütern liefern, die durchgehend in jeweils einen bestimmten Trailer verbracht werden sollen. Dies könnte auf vorteilhafte Weise mittels eines Teleskopförderers erfolgen. Zu anderen Zeiten könnte die gleiche Zuführeinrichtung Stückgüter liefern, von denen jeweils eine kleinere Menge in verschiedene Trailer verbracht werden soll. In diesem Fall könnte es effektiver sein, wenn Bedienpersonal die Stückgüter für jeden Trailer in einen Rollcontainer lädt, diesen zu dem Trailer schiebt und ihn dort auslädt. Bei einer solchen oder ähnlichen wechselnden Nutzung einer Zuführeinrichtung könnte ein dauerhaft vor der Zuführeinrichtung angeordneter Teleskopförderer eine Nutzung der Zuführeinrichtung ohne Teleskopförderer erschweren.

Die Erfindung sieht daher vor, dass ein Teleskopförderer zwischen einer Parkposition und einer Betriebsposition in Förderrichtung des Teleskopförderers bewegbar ist. Die Bewegung kann dabei von mindestens einem örtlich fixierten Führungselement geführt werden. Durch die Führung der Bewegung zwischen der Parkposition und der Betriebsposition kann das mindestens eine Führungselement gerade auf engem Raum die Bewegung erleichtern, beispielsweise indem ein Verkanten des Teleskopförderers verhindern wird. Außerdem können Beschädigungen des Teleskopförderers und anderer Anlagekomponenten verhindert werden, da mit fest vorgegebenen Bewegungsmustern Zusammenstöße vermieden werden können. Die Parkposition kann immer dann eingenommen werden, wenn der Teleskopförderer nicht benötigt wird, so dass der in der Betriebsposition von dem Teleskopförderer eingenommene Raum für andere Zwecke genutzt werden kann. Gleichzeitig lässt sich der Teleskopförderer jederzeit schnell und auf einfache Weise in die Betriebsposition überführen, wenn der Einsatz des Teleskopförderers gewünscht wird. Unter Förderrichtung ist die von dem Teleskopförderer ermöglichte Hauptförderrichtung des Teleskopförderers zu verstehen. Das heißt, falls der Teleskopförderer schwenkbar ist, so ist die ermöglichte Förderrichtung ohne Verschwenkung gemeint. In beispielhaften Ausführungsformen kann der Teleskopförderer für verschiedene Einsatzsituationen mit entgegengesetzten Förderrichtungen betreibbar sein. In anderen beispielhaften Ausführungsformen kann der Teleskopförderer aber auch nur mit einer Förderrichtung betreibbar sein. Das heißt, wenn die Betriebsposition von der Parkposition in letzterem Fall durch eine Bewegung in Förderrichtung erreicht wird, so wird die Parkposition von der Betriebsposition durch eine Bewegung gegen Förderrichtung erreicht, und umgekehrt.

Das mindestens eine Führungselement kann zusammen mit dem Teleskopförderer die Parkposition und gegebenenfalls die Betriebsposition definieren. Es versteht sich, dass eine solche Betriebsposition in beispielhaften Ausführungsformen nur eine von vielen möglichen Betriebspositionen sein könnte.

Der Teleskopförderer kann beispielsweise ein Teleskopgurtförderer sein. Teleskopgurtförderer werden auch als Teleskopbandförderer bezeichnet. Anstelle eines Fördergurtes oder Förderbandes kann aber auch eine andere Art von Fördertechnik für den Teleskopförderer vorgesehen sein.

Die vorgesehene Parkposition des Teleskopförderers befindet sich unter einer ortsfesten Fördereinheit einer Anlage. Der Teleskopförderer kann auf verschiedene Weisen bewegbar ausgestaltet sein. Der Teleskopförderer könnte zum Beispiel Räder aufweisen. Anstelle von Rädern könnte der Teleskopförderer zum Beispiel an seiner Unterseite gelagerte Rollen aufweisen und auf diesen bewegbar sein.

In einer beispielhaften Ausführungsform des Systems weist der Teleskopförderer Räder auf, und das mindestens eine Führungselement weist mindestens eine Schiene zum Führen des Teleskopförderers auf. Optional, aber nicht notwendigerweise, könnte die mindestens eine Schiene speziell mindestens eines der Räder führen. Eine Schiene und mindestens ein Rad könnten hierzu beliebig aufeinander abgestimmt ausgebildet sein. Die Schiene könnte beispielsweise eine Rinne aufweisen, in der das Rad geführt wird. Das Rad könnte aber auch entlang des Umfangs eine Nut aufweisen und mittels der Nut von einer stegförmigen Schiene geführt werden. Der Teleskopförderer könnte auch rechts und links Räder aufweisen, und zwei einfache Schienen könnten jeweils an der Außenseite der Räder oder jeweils an der Innenseite der Räder den Teleskopförderer bei einer Bewegung zwischen den verschiedenen Positionen führen.

Ein Teil der Schienen könnte auch ausziehbar sein, um den möglichen Bewegungsverlauf bis zu einer Betriebsposition vollständig zu begrenzen.

Anstelle von Schienen könnten aber auch andere Führungselemente verwendet werden. Beispielsweise könnte ein ortsfest installierbares Gerüst mit Seitenwänden oder ein ortsfest installierbares Gehäuse vorgesehen werden, wobei die Seitenwände des Gerüsts oder des Gehäuses dann als Führungselemente dienen können. Eine solche Konstruktion mit Seitenwänden kann den Effekt haben, dass seitliche Teile des Teleskopförderers auch bei Bewegungen zwischen Park- und Betriebsposition teilweise verdeckt sind. Hierdurch kann einerseits eine Verletzungsgefahr reduziert werden und andererseits die Möglichkeiten reduziert werden, dass ungewollt Gegenstände in gegebenenfalls schwieriger zugänglichen Bereichen in den Weg des Teleskopförderers gelangen.

In einer beispielhaften Ausführungsform des Systems weist der Teleskopförderer ein durch das mindestens eine Führungselement führbares Führungsrad auf. Das Vorsehen eines Führungsrads kann den Effekt haben, dass es sich besonders einfach implementieren lässt. Das Führungsrad könnte beispielsweise in einem hinteren Bereich des Teleskopförderers angeordnet sein. Dies kann den Effekt haben, dass der eigentliche Teleskopförderer unter Führung durch das mindestens eine Führungselement bis vor das mindestens eine Führungselement verschoben werden kann. Das Führungsrad könnte zusätzlich oder alternativ beispielsweise mittig zum Teleskopförderer angeordnet sein. Dies kann den Effekt haben, dass eine geradlinige Führung mit einfachen Mitteln ermöglicht wird. Das Führungsrad könnte zusätzlich oder alternativ beispielsweise horizontal ausgerichtet sein. Dies kann den Effekt haben, dass die Führung unabhängig von der Bewegung von Rädern erfolgen kann, auf denen der Teleskopförderer zwischen den verschiedenen Positionen bewegt werden könnte. Das Führungsrad könnte zusätzlich oder alternativ beispielsweise zwischen zwei als das mindestens eine Führungselement fungierenden Schienen geführt werden. Dies kann den Effekt haben, dass die Bewegung des Teleskopförderers sicher auf zwei Seiten begrenzt ist.

In einer beispielhaften Ausführungsform des Systems weist der Teleskopförderer Mittel zur Höhenverstellung eines vorderen Endes des Teleskopförderers unter Beibehaltung einer Höhe eines hinteren Endes des Teleskopförderers auf. Dies kann den Effekt haben, dass das vordere Ende des Teleskopförderers auch bei einer insgesamt sehr niedrigen Bauweise des Teleskopförderers für den Betrieb auf eine ergonomisch sinnvolle Höhe gebracht werden kann. Die Mittel können dabei beispielsweise mindestens einen Hydraulikzylinder umfassen. Die Mittel könnten aber auch auf beliebige andere Art ausgebildet sein, etwa in Form einer manuell betätigbaren Hebevorrichtung mit Zahnstangenwinde o.ä.

Der Teleskopförderer könnte für einen Wechsel zwischen Parkposition und Betriebsposition von Bedienpersonal von Hand bewegt werden, also insbesondere gezogen oder geschoben werden. Hierzu könnte in einer beispielhaften Ausführungsform mindestens ein Griff an dem Teleskopförderer vorgesehen werden.

In einer anderen beispielhaften Ausführungsform weist der Teleskopförderer jedoch Räder und mindestens einen Motor zum Antreiben mindestens eines der Räder auf, und das System weist mindestens eine Steuereinheit auf, die dazu eingerichtet ist, auf eine Nutzereingabe hin den mindestens einen Motor zu steuern. Hierdurch kann das Bewegen des Teleskopförderers für das Bedienpersonal besonders einfach gestaltet werden. Die Steuereinheit kann Bestandteil des Teleskopförderers sein oder außerhalb des Teleskopförderers angeordnet sein. Die Steuereinheit kann Hardware und/oder Software umfassen. Die Steuereinheit kann beispielsweise einen elektronischen Schaltkreis umfassen. Die Steuereinheit kann beispielsweise mindestens einen Prozessor und mindestens einen mit dem Prozessor verbundenen Speicher umfassen. Der Speicher kann Programmanweisungen umfassen und der Prozessor kann dazu eingerichtet sein, Programmanweisungen aus dem Speicher auszuführen, um damit das System zu veranlassen, bestimmte Aktionen auszuführen. Die Steuereinheit kann beispielsweise ein Computer sein. Für die Nutzereingabe kann eine beliebige Nutzerschnittstelle vorgesehen sein, wie Tasten, Regler und/oder ein Touchscreen.

In einer beispielhaften Ausführungsform umfasst das System mindestens eine Komponente zur mechanischen Begrenzung der Bewegung des Teleskopförderers über die Parkposition und/oder über die Betriebsposition hinaus. Durch ein Sicherstellen, dass der Teleskopförderer nicht über die Parkposition hinaus bewegt werden kann, können Beschädigungen von hinter der Parkposition angeordneten Komponenten vermieden werden. Außerdem kann so vermieden werden, dass der Teleskopförderer gegebenenfalls nicht mehr gut zugänglich ist. Durch ein Sicherstellen, dass der Teleskopförderer nicht über die Betriebsposition hinaus bewegt werden kann, kann zum Beispiel sichergestellt werden, dass sich der Teleskopförderer stets in einem optimalen Funktionszusammenhang mit anderen Förderelementen befindet. Wird der Teleskopförderer beispielsweise zusammen mit einer Zuführeinrichtung verwendet, so kann eine Lücke zwischen der Zuführeinrichtung und dem Teleskopförderer vermieden werden, in die kleinere Stückgüter fallen könnten oder in denen sich Stückgüter verhaken könnten.

In einer beispielhaften Ausführungsform umfasst das System mindestens einen Sensor, der dazu angeordnet ist, das Erreichen einer Parkposition und/oder einer Betriebsposition des Teleskopförderers zu erfassen. Der Sensor kann statt einer mechanischen Begrenzung oder zusammen mit einer mechanischen Begrenzung der Bewegung eingesetzt werden.

Der Sensor kann das Erreichen einer Parkposition und/oder einer Betriebsposition beispielsweise einer Steuereinheit anzeigen. Hierzu kann der Sensor der Steuereinheit alle Messwerte übermitteln, oder er kann zum Beispiel nur dann ein Signal an die Steuereinheit übermitteln, wenn ein vorgegebener Grenzwert überschritten wurde. Die Steuereinheit kann beispielsweise dazu eingerichtet sein zu veranlassen, einen für die Bewegung des Teleskopförderers genutzten Motor anzuhalten, wenn angezeigt wird, dass eine gewünschte Position erreicht ist. Soll der Teleskopförderer dagegen beispielsweise von Hand zwischen den Positionen bewegt werden, so könnte ein von einem Sensor erfasstes Erreichen einer Parkposition und/oder einer Betriebsposition des Teleskopförderers zu einem von der Steuereinheit veranlassten akustischen und/oder optischen Signal für das Bedienpersonal führen.

Der Sensor kann beliebig gewählt und angeordnet werden, solange sich Sensor und Anordnung für den vorgesehenen Zweck eignen. So kann es sich um einen Sensor handeln, der das Drehmoment eines Motors erfasst, das über einen vorgegebenen Grenzwert steigen könnte, wenn der Teleskopförderer ein mechanisches Begrenzungselement erreicht hat. Alternativ kann es sich um einen Lichtsensor handeln, der an dem Teleskopförderer, einem Führungselement oder separat von beidem angeordnet ist. Ein Lichtsensor könnte beispielsweise ein zweidimensionales Bild aufnehmen, und eine Steuereinrichtung könnte überprüfen, ob ein aktuelles Bild bzw. ein Ausschnitt hieraus einem vorgegebenen Bild entspricht. Das vorgegebene Bild kann ein zuvor an einem installierten System aufgenommenes Bild sein, oder ein Bild einer Markierung, die an einer vorgegebenen Stelle an einem Führungselement und/oder dem Teleskopförderer angebracht wurde. Ein Lichtsensor könnte alternativ eine Fotodiode sein, die direktes oder reflektiertes Licht von einer passend angeordneten Lichtquelle erfasst, wenn eine bestimmte Position erreicht wurde.

In einer beispielhaften Ausführungsform umfasst das System mindestens eine Halteeinrichtung zum Halten des Teleskopförderers in der Parkposition und/oder in der Betriebsposition des Teleskopförderers. Hierdurch kann ein ungewolltes Bewegen des Teleskopförderers aus der erreichten Position heraus verhindert oder erschwert werden. Umfasst der Teleskopförderer Räder, so kann die Halteeinrichtung beispielsweise eine Feststellbremse oder andere Arretiermittel umfassen, die manuell oder elektrisch betätigt werden können. Alternativ könnten die Führungselemente beispielsweise eine Art Schwelle für mindestens eines der Räder bereitstellen, die für eine beabsichtigte Bewegung leicht zu Überfahren sind, einer unbeabsichtigten Bewegung aus einer erreichten Zielposition heraus aber einen gewissen Widerstand entgegensetzt. Weiter alternativ könnten, insbesondere in der Betriebsposition, in dem Teleskopförderer angebrachte, höhenverstellbare Stützen ausgefahren werden. Das Ausfahren kann dabei manuell oder mittels Motor erfolgen. Derartige Stützen könnten auch soweit ausgefahren werden, dass zumindest ein Teil der vorhandenen Räder den Kontakt mit dem Boden verliert. Gegebenenfalls kann der Teleskopförderer in der Betriebsposition mittels solcher Stützen auch auf eine geeignete Höhe gebracht werden, um einen planen Übergang zu anderen Fördereinheiten zu ermöglichen.

In einer beispielhaften Ausführungsform des Systems weisen der Teleskopförderer und das mindestens eine Führungselement zusammenwirkende Komponenten für eine Stabilisierung des Teleskopförderers beim Betrieb des Teleskopförderers in einer Betriebsposition auf. Befindet sich die Parkposition des Teleskopförderers beispielsweise unter einer Fördereinrichtung, so ist die mögliche Höhe des Teleskopförderers limitiert. Um in ausgefahrenem Zustand dennoch eine gewisse Länge mittels mehrerer Teleskopsegmente erreichen zu können, müssen vergleichsweise dünne und damit leichte Materialien verwendet werden. Um ein Umkippen des Teleskopförderers zu verhindern, wenn schwere Stückgüter im vorderen Bereich des ausgefahrenen Teleskopförderers ankommen, kann zur Stabilisierung ein Gegengewicht im hinteren, unteren Bereich des Teleskopförderers angeordnet sein. Zusätzlich oder alternativ könnten Komponenten des Teleskopförderers in der Betriebsposition aber auch in geeigneter Weise mit komplementären Komponenten der ortsfest fixierten Führungselemente zusammenwirken, um den Teleskopförderer zu stabilisieren.

In einer beispielhaften Ausführungsform umfasst das System ferner eine Fördereinrichtung einer ortsfesten Anlage, wobei das mindestens eine Führungselement mittels der Befestigungskomponenten derart unter der Fördereinrichtung fixiert ist, dass sich der Teleskopförderer in seiner Parkposition zumindest zum größeren Teil unter der Fördereinrichtung befindet. Das heißt, mehr als die Hälfte des Teleskopförderers befindet sich unter der Fördereinrichtung, vorzugsweise mehr als zwei Drittel, weiter vorzugsweise mehr als drei Viertel. Befindet sich ein kleiner Teil des Teleskopförderers nicht unter der Fördereinrichtung, so könnten einige Bedienelemente des Teleskopförderers leichter zugänglich sein. Je größer der Teil des Teleskopförderers ist, der sich unter der Fördereinrichtung befindet, desto mehr Raum wird allerdings vor der Fördereinrichtung gewonnen, solange der Teleskopförderer nicht benötigt wird. In einigen beispielhaften Ausführungsformen befindet sich der Teleskopförderer in der Parkposition daher vollständig unter der Fördereinrichtung.

In einer beispielhaften Ausführungsform umfasst das mindestens eine Führungselement mindestens eine Schiene, die mittig unter der Fördereinrichtung fixiert ist und sich längs der Förderrichtung der Fördereinrichtung erstreckt. Die mindestens eine Schiene könnte beispielsweise auch ein Schienenpaar sein, das als Gesamtheit mittig unter der Fördereinrichtung fixiert ist. Es versteht sich jedoch, dass Schienen oder andere Führungselemente nicht notwendigerweise mittig unter der Fördereinrichtung fixiert sein müssen; sie könnten beispielsweise auch randnah unter der Fördereinrichtung fixiert sein.

In einer beispielhaften Ausführungsform des Systems befindet sich der Teleskopförderer in seiner Betriebsposition zumindest zum größeren Teil vor der Fördereinrichtung. Die Fördereinrichtung könnte dann eine erste Förderhöhe aufweisen, die höher ist als eine Förderhöhe des Teleskopförderers in seiner Betriebsposition in einem an die Fördereinrichtung angrenzenden Bereich. Die Fördereinrichtung könnte außerdem ein vorderes Ende aufweisen, das auf eine zweite Förderhöhe absenkbar ist, die der Förderhöhe des Teleskopförderers in dem an die Fördereinrichtung angrenzenden Bereich entspricht. Dies könnte den Effekt haben, dass sich ein im Wesentlichen ebener Übergang zwischen der Fördereinrichtung und dem Teleskopförderer erzielen lässt, so dass beförderte Stückgüter keine Stufen überwinden müssen.

Zum Unterstützen der Absenkung könnte die Fördereinrichtung beispielsweise mindestens einen Aktor aufweisen, und das vordere Ende der Fördereinrichtung könnte mittels des Aktors auf die zweite Förderhöhe absenkbar sein. Der Aktor könnte dann ebenso verwendet werden, um das vordere Ende der Fördereinrichtung wieder auf die erste Höhe zu bringen, wenn der Teleskopförderer zwischenzeitlich nicht genutzt wird. Alternativ zu einem Aktor könnten aber beispielsweise auch ein von Hand betätigbarer, rein mechanischer Verstellmechanismus vorgesehen werden.

Die ortsfeste Anlage kann beispielsweise eine Sortieranlage und/oder eine Codieranlage sein. Die Fördereinrichtung kann beispielsweise eine Zuführeinrichtung umfassen. Die durch die Zuführeinrichtung unterstützte Zuführung von Stückgütern kann dabei eine Zuführung aus der Anlage heraus und/oder in die Anlage hinein umfassen. Eine solche Sortier- oder Codieranlage könnten beispielsweise für ein Sortieren und/oder Codieren von Paketen oder Briefen vorgesehen sein. Andere ortsfeste Anlagen mit mindestens einer Fördereinrichtung könnten beispielsweise Produktionsanlagen sein, in denen End- oder Zwischenprodukte hergestellt und für einen Weitertransport bereitgestellt werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### KURZE BESCHREIBUNG DER ZEICHNUNGEN

In den Figuren zeigt:
- Fig. 1: eine schematische Darstellung einer beispielhaften Ausführungsform eines erfindungsgemäßen Systems mit einem Teleskopförderer in einer Parkposition;
- Fig. 2: eine Draufsicht auf eine beispielhafte Ausführungsform von Führungselementen;
- Fig. 3: eine schematische Darstellung einer beispielhaften Ausführungsform eines erfindungsgemäßen Systems mit einem Teleskopförderer in einer Betriebsposition;
- Fig. 4: eine Schnittansicht auf einen Ausschnitt einer beispielhaften Ausführungsform eines erfindungsgemäßen Systems;
- Fig. 5: ein Ablaufdiagramm mit Verfahrensschritten einer beispielhaften Ausführungsform des erfindungsgemäßen Verfahrens;
- Fig. 6: eine schematische Darstellung einer weiteren beispielhaften Ausführungsform eines erfindungsgemäßen Systems mit einem Teleskopförderer in einer Parkposition;
- Fig. 7: eine schematische Darstellung von Details zu der weiteren beispielhaften Ausführungsform;
- Fig. 8: eine weitere schematische Darstellung von Details zu der weiteren beispielhaften Ausführungsform;
- Fig. 9: eine weitere schematische Darstellung von Details zu der weiteren beispielhaften Ausführungsform;
- Fig. 10: eine weitere schematische Darstellung von Details zu der weiteren beispielhaften Ausführungsform; und
- Fig. 11: eine weitere schematische Darstellung von Details zu der weiteren beispielhaften Ausführungsform.

### DETAILLIERTE BESCHREIBUNG EINIGER BEISPIELHAFTER AUSFÜHRUNGSFORMEN DER ERFINDUNG

Die vorliegende Erfindung wird im Folgenden anhand von beispielhaften Ausführungsformen beschrieben, die eine flexible Nutzung eines Teleskopförderers ermöglichen.

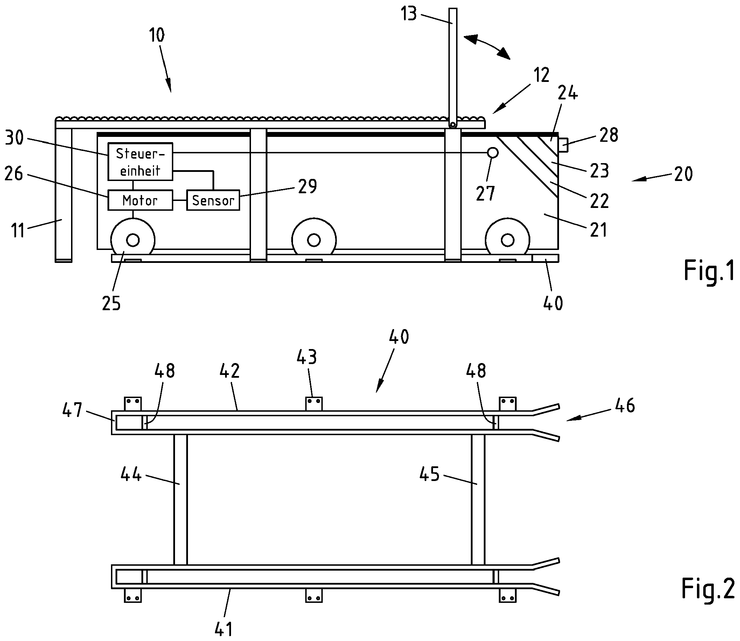

Figur 1 ist eine schematische Darstellung einer ersten beispielhaften Ausführungsform eines erfindungsgemäßen Systems.

Das System umfasst mindestens einen Teleskopgurtförderer und dem mindestens einen Teleskopgurtförderer zugeordnete Führungselemente. Die Teleskopgurtförderer werden beispielhaft in einer Paketsortieranlage eingesetzt.

Die Sortieranlage umfasst verschiedene Förderrichtungen, unter anderem eine Mehrzahl an Rollenförderern als beispielhafte Zuführeinrichtungen. Die Sortieranlage erfasst die auf den Paketen angegebenen Adressen und führt sie mittels diverser Fördereinheiten einem der Rollenförderer zu, der für die erfasste Adresse vorgesehen ist. Die Sortieranlage kann auch noch andere Aufgaben erfüllen, wie ein Wiegen der Pakete, ein Codieren der Pakete basierend auf erfassten Adressen, usw. Zumindest vor einigen der Rollenförderer kann ein Trailer abgestellt werden, in dem die von dem jeweiligen Rollenförderer bereitgestellten Pakete mittels eines Sattelschleppers weiterbefördert werden sollen. Der Fußboden der gesamten Anlage könnte beispielsweise eine Höhe von 1,2 m aufweisen, was der üblichen Höhe des Laderaumbodens von Trailern entspricht. Die Rollenförderer können dann auf oder vor einer entsprechend hohen Verladerampe enden, so dass sich von der Verladerampe aus ein im Wesentlichen ebener Übergang zum Laderaumboden eines vor der Verladerampe stehenden Trailers ergibt.

Figur 1 zeigt nun beispielhaft einen dieser Rollenförderer 10. Der Rollenförderer 10 hat eine bestimmte Höhe, zum Beispiel eine Höhe, die es einem Bedienpersonal ergonomisch vorteilhaft ermöglicht, ankommende Pakete herunterzunehmen und in einen Rollcontainer zu verbringen. Der Rollenförderer 10 kann hierzu geeignet hohe, seitliche Abstützungen 11 aufweisen, die fest im Boden verankert sein können und einen Freiraum unter dem Rollenförderer 10 lassen.

Figur 1 zeigt ferner einen Teleskopgurtförderer 20 mit zugeordneten Führungselementen 40.

Der Teleskopgurtförderer 20 umfasst ein Tragegerüst 21 und mehrere teleskopartig ausfahrbare Teleskopsegmente 22, 23, 24. Der Teleskopgurtförderer 20 ist in Figur 1 in zusammengeschobenem Zustand in einer Parkposition unter dem Rollenförderer 10 gezeigt.

Der Teleskopgurtförderer 20 umfasst eine Mehrzahl von Rädern 25, die an beiden Seiten des Tragegerüsts 21 montiert sind. So könnten unter dem Tragegerüst 21 mehrere Achsen montiert sein, die jeweils ein Paar Räder 25 an ihren beiden Enden halten. Die Räder 25 sind so angebracht, dass der Teleskopgurtförderer 20 auf den Rädern 25 rollend in Längsrichtung des Tragegerüsts 21 bewegt werden kann. Optional sind die Räder 25 so angebracht, dass sie auch Bewegungen in andere Richtungen ermöglichen. Der Teleskopgurtförderer 20 umfasst außerdem einen Motor 26, der mindestens eines der Räder 25 über ein Getriebe sowohl in Vorwärts als auch in Rückwärtsrichtung antreiben kann. Beispielsweise könnte der Motor 26 hierzu über das Getriebe eine umlaufende Achse antreiben, an der das hinterste Räderpaar angebracht ist, während die anderen Achsen feststehende oder umlaufende Achsen sein könnten. Es versteht sich aber, dass ein oder mehrere Motoren eines oder mehrere der Räder auf diverse andere Arten antreiben könnten.

Der Teleskopgurtförderer 20 umfasst außerdem weitere Motoren (nicht dargestellt) zum Ein- und Ausfahren der Teleskopsegmente 22, 23, 24 sowie gegebenenfalls zur hydraulischen Höheneinstellung und zum Verschwenken des Teleskopgurtförderers 20.

Der Teleskopgurtförderer 20 umfasst des Weiteren Bedienelemente 27, 28 und einen Sensor 29. Die Bedienelemente 27, 28 können es dem Bedienpersonal unter anderem erlauben, eine Bewegung des Teleskopgurtförderers 20 in die Parkposition bzw. in eine Betriebsposition zu veranlassen. Sie können es dem Bedienpersonal ebenso erlauben, ein Ein- und Ausfahren der Teleskopsegmente 22, 23, 24, eine Höhenänderung und/oder ein Verschwenken des Teleskopgurtförderers 20 zu veranlassen. Sie können es dem Bedienpersonal ebenso erlauben, ein Starten und Stoppen eines Bandlaufs des Teleskopgurtförderers 20 oder einen Notstop jeglicher Bewegung des Teleskopgurtförderers 20 zu veranlassen. Der Sensor 29 kann dafür vorgesehen sein, das Erreichen einer Park- und/oder einer Betriebsposition zu registrieren. Er kann auf vielfältige Weise ausgebildet sein. Beispielsweise könnte er dem Motor 26 zugeordnet sein und dessen aufgebrachtes Drehmoment erfassen.

Der Teleskopgurtförderer 20 umfasst außerdem eine Steuereinheit 30. Die Steuereinheit 30 kann beispielsweise mindestens einen Prozessor und mindestens einen Speicher umfassen, wobei der Prozessor dazu eingerichtet sein kann, in dem Speicher gespeicherte Programme auszuführen und damit den Teleskopgurtförderer 20 zu veranlassen, gewünschte Aktionen auszuführen. Die Steuereinheit 30 ist einerseits mit dem Motor 26 verbunden und andererseits mit mindestens einem der Bedienelemente 27, 28. Zusätzlich kann die Steuereinheit 30 mit den weiteren Motoren und mit dem Sensor 29 verbunden sein.

Die Steuereinheit 30 könnte auch mit einem Funkempfänger oder einer funkbasierten Sende-/Empfangseinrichtung des Teleskopförderers 20 (nicht dargestellt) für eine drahtlose Kommunikation mit einer Steuereinheit außerhalb des Teleskopförderers 20 verbunden sein. Hierbei könnte es sich beispielsweise um eine Steuereinheit mit Nutzerschnittstelle für den Rollenförderer 10 der Sortieranlage handeln, so dass das Bedienpersonal zumindest einige Steuerbefehle für den Rollenförderer 10 und für den Teleskopgurtförderer 20 an einer zentralen Einheit eingeben könnte. Es versteht sich, dass auch ein Teil der Kommunikations- und Steuerungsverbindungen innerhalb des Teleskopgurtförderers 20 drahtlos realisiert sein könnten. Es versteht sich außerdem, dass auch eine Verbindung zu einer externen Steuereinheit drahtgebunden sein könnte. Entsprechende Leitungen könnten zum Beispiel zusammen mit einer Leitung für die Stromversorgung des Teleskopgurtförderers 20 so verlegt sein, dass eine Behinderung der Bewegung des Teleskopgurtförderers 20 vermieden wird bzw. eine Unterbrechung der Leitungen durch eine Bewegung des Teleskopgurtförderers 20 verhindert wird.

In der in Figur 1 dargestellten Parkposition befindet sich der größere Teil des Teleskopförderers 20 unter dem Rollenförderer 10. Ein kleiner, vorderer Teil ragt jedoch beispielhaft heraus. Hierdurch sind Bedienelemente 27, 28 im vorderen Bereich des Teleskopgurtförderers 20 auch in der Parkposition leicht zugänglich. Bei der Nutzung des Rollenförderers 10 ohne Teleskopförderer 20 könnte der vorstehende Teil des Teleskopförderers 20 mittels eines an der Entnahmeseite 12 des Rollenförderers 10 angebrachten Klapptischs 13 überbrückt werden.

Die Führungselemente 40 sind unterhalb des Rollenförderers 10 ortsfest angebracht, definieren eine Park- und eine Betriebsposition des Teleskopförderers 20 und führen den Teleskopförderer 20 bei einer Bewegung zwischen diesen Positionen.

Figur 2 ist eine Draufsicht auf eine schematische Darstellung beispielhafter Führungselemente 40.

Als Führungselemente 40 sind hier zwei Führungsschienen 41, 42 vorgesehen. Jede der Führungsschienen 41, 42 bildet beispielhaft eine Rinne als führende Einrichtung für die Räder 25 an jeweils einer Seite des Teleskopförderers 20. Die Führungsschienen 41, 42 weisen Befestigungselemente 43, beispielsweise Winkelbefestigungen, auf, mit denen sie am Boden verschraubt werden können. Andere Befestigungsweisen sind ebenso möglich. Die Führungsschienen 41, 42 weisen zueinander einen bestimmten, durch den Abstand der Räder 25 des Teleskopförderers 20 vorgegebenen Abstand auf. Zur Vereinfachung der Montage können Abstandshalter 44, 45 zwischen den Führungsschienen 41, 42 vorgesehen sein.

Die Führungsschienen 41, 42 weisen eine Länge auf, die beispielsweise etwas kürzer sein kann als die Länge des Tragegerüsts 21 des Teleskopförderers 20, was im Wesentlichen der Länge des Teleskopförderers 20 im zusammengeschobenen Zustand entspricht. Sie könnten so angeordnet sein, dass ihr vorderes Ende 46 an der Entnahmeseite 12 des Rollenförderers 10 leicht unter dem Rollenförderer 10 hervorragt. Wenn sich der Teleskopförderer 20 in der Parkposition befindet, könnten die hinteren Enden 47 der Führungsschienen 41, 42 mit den hinteren Rädern 25 des Teleskopförderers 20 und die vorderen Enden 46 der Führungsschienen 41, 42 bündig mit dem Vorderteil des Teleskopförderers 20 abschließen. Ist dagegen vorgesehen, dass der Teleskopförderer 20 in der Parkposition vollständig unter dem Rollenförderer 10 verstaut wird, so könnte es sinnvoll sein die Führungsschienen 20 etwas weiter vorstehen zu lassen.

Die durch die Führungsschienen 41, 42 gebildeten Rinnen könnten am hinteren Enden 47 der Führungsschienen 41, 42 nach hinten abgeschlossen sein, so dass der Teleskopförderer 20 nicht über die vorgesehene Parkposition hinausgerollt werden kann. Es handelt sich bei diesem Abschluss 47 somit um eine beispielhafte mechanische Begrenzung der Bewegung des Teleskopförderers 20 über die Parkposition hinaus.

Die durch die Führungsschienen 41, 42 gebildeten Rinnen könnten sich am vorderen Enden 46 der Führungsschienen 41, 42 leicht erweitern, um ein erstes Einführen der Räder 25 des Teleskopförderers 20 in die Führungsschienen 41, 42 zu erleichtern.

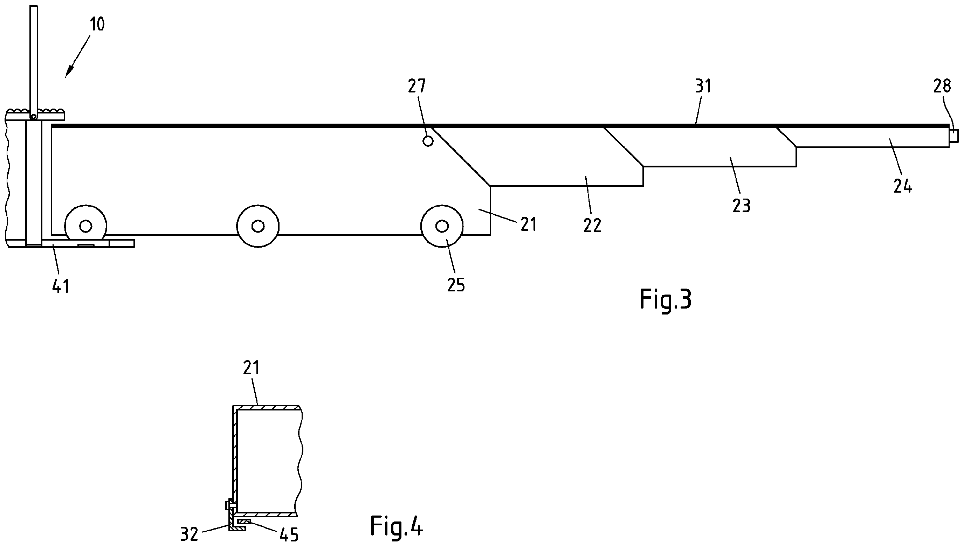

Figur 3 ist eine weitere schematische Darstellung der beispielhaften Ausführungsform des erfindungsgemäßen Systems.

In Figur 3 sind die gleichen Komponenten des Systems gezeigt wie in Figur 1, jedoch in einer anderen Situation. In Figur 3 ist der Teleskopgurtförderer 20 in seiner Betriebsposition vor dem Rollenförderer 10 und darüber hinaus mit vollständig ausgefahrenen Teleskopsegmenten 22, 23, 24 gezeigt. Der Teleskopgurtförderer 20 umfasst ein endloses Förderband 31, das über diverse Rollen so geführt wird, dass es in unterschiedlichen Ausfahrstadien der Teleskopsegmente 22, 23, 24 an der oberen Seite des Teleskopbandförderers 20 über die jeweilige Länge des Teleskopbandförderers 20 hinweg gespannt und antreibbar zum Befördern von Paketen zur Verfügung steht. Für das Antreiben des Förderbands 31 kann der Teleskopgurtförderer 20 einen weiteren Motor (nicht dargestellt) umfassen. Beispielhaft ist nur eine Förderrichtung vorgesehen, von dem an den Rollenförderer 10 angrenzenden Ende des Teleskopgurtförderers 20 hin zum gegenüber liegenden Ende des Teleskopsegments 24. In einer alternativen Ausführungsform könnte die Förderrichtung aber auch umkehrbar sein.

Die Länge des Tragegerüsts 21, und damit die minimale Förderstrecke, könnte beispielsweise im Bereich von 4-5 m liegen. Die Länge des Teleskopgurtförderers 20 in dem in Figur 3 gezeigten vollständig ausgefahrenen Zustand, und damit die maximale Förderstrecke, könnte beispielweise im Bereich von 12-15 m liegen. Es versteht sich, dass es sich nur um Bespielbereiche handelt. Sowohl die minimale Förderstrecke als auch die maximale Förderstrecke könnten auch außerhalb des jeweils angegebenen Bereichs liegen. Außerdem könnten mehr oder weniger als drei Teleskopsegmente eingesetzt werden.

Der in Figur 3 dargestellte, ausgefahrene Teleskopgurtförderer 20 weist eine im Wesentlichen horizontale Förderfläche auf der minimalen Höhe auf. Die sinnvolle minimale Höhe ist durch verschiedene Parameter vorgegeben. Sie sollte so hoch sein, dass der Teleskopgurtförderer 20 zum Verbringen in die Parkposition genau unter den Rollenförderer 10 passt, so dass kein großer Höhenunterschied zwischen der Oberseite des Rollenförderers 10 und der Oberseite des Teleskopgurtförderers 20 besteht. Der Rollenförderer 10 wiederum sollte nicht zu hoch sein, um dem Bedienpersonal eine einfache Entnahme von Paketen auch ohne Nutzung des Teleskopgurtförderers 20 zu ermöglichen. Eine sinnvolle minimale Höhe des Förderbandes des Teleskopgurtförderers 20 könnte zwischen 0,5 m und 1 m liegen. Mit einer hydraulischen Höhenverstellung könnte dann eine maximale Höhe des Endes des Förderbands bei vollständig ausgefahrenem Teleskopgurtförderer 20 im Bereich von 1m - 1,5m vorgesehen werden. Es versteht sich, dass es sich wiederum nur um Bespielbereiche handelt. Sowohl die minimale Höhe als auch die maximale Höhe könnten auch außerhalb des jeweils angegebenen Bereichs liegen.

Figur 4 ist eine schematische Schnittansicht durch den hinteren Teil des Teleskopgurtförderers 20 und den vorderen Abstandhalter 45 der Führungselemente 40.

Der vordere Abstandhalter 45 könnte leicht erhöht über dem Boden angebracht sein. Der Teleskopgurtförderer 20 könnte dann im hinteren Bereich eine (erst in Parkposition angebrachte) Komponente 32 aufweisen, die über die Unterseite des Tragegerüsts 21 hinaus in Richtung Boden ragt und über dem Boden zur Vorderseite des Teleskopgurtförderers 20 hin abgewinkelt ist. Die Komponente 32 könnte einen Abstand vom Boden aufweisen, der sicherstellt, dass die Komponente 32 beim Anfahren der Betriebsposition des Teleskopgurtförderers 20 mit dem vorderen Abstandhalter 45 in Eingriff kommt. Hierdurch kann zum einen eine beispielhafte mechanische Begrenzung der Bewegung des Teleskopförderers 20 über die Betriebsposition hinaus geschaffen werden. Zum anderen kann hierdurch eine zusätzliche Stabilisierung des Teleskopförderers 20 im Betrieb im ausgefahrenen Zustand erzielt werden.

Der hintere Abstandhalter 44 aus Figur 2 könnte dagegen beispielsweise dicht über dem Boden angebracht sein. Die Komponente 32 könnte dann einen Abstand vom Boden aufweisen, der außerdem sicherstellt, dass die Komponente 32 beim Anfahren der Parkposition des Teleskopgurtförderers 20 über den hinteren Abstandhalter 44 hinweg gleitet. Andererseits könnte auch auf einen Abschluss der Rinnen am hinteren Ende 47 der Führungsschienen 41, 42 verzichtet werden, wenn der hintere Abstandhalter 44 ganz am hinteren Ende der Führungsschienen 41, 42 auf einer Höhe angebracht wird, die sicherstellt, dass der Teleskopgurtförderer 20 beim Anfahren der Parkposition durch den Winkel 32 gestoppt wird.

Unabhängig von der Art der mechanischen Begrenzungen könnte ein Sensor 29 dazu eingerichtet sein, das von dem Motor 26 aufgebrachte Drehmoment zu messen und der Steuereinheit 30 ein Signal zu übermitteln, wenn das Drehmoment einen vorgegebenen Grenzwert überschreitet. Die Steuereinheit 30 kann dazu eingerichtet sein, den Motor 26 bei Empfang eines solchen Signals ausschalten, da dann angenommen werden kann, dass die jeweils angestrebte Position erreicht wurde - oder dass ein sonstiges, unvorhergesehenes Problem aufgetreten ist.

Eine ungewollte Bewegung des Teleskopgurtförderers 20 aus der erreichten Parkposition oder der erreichten Betriebsposition heraus könnte dadurch verhindert werden, dass die angetriebenen Räder 25 von dem Motor 26 blockiert werden. Alternativ oder zusätzlich könnte aber auch eine kleine Erhebung 48 in den Rinnen vorgesehen werden, die bei Antrieb durch den Motor 26 leicht überwunden werden, ansonsten aber ein unbeabsichtigtes Verschieben des Teleskopgurtförderers 20 erschweren.

Der Motor 26 bzw. die Kombination aus den Erhebungen 48 mit den geschlossenen Rinnenenden 47 und die Kombination aus den Erhebungen 48 mit dem Winkel 32 bilden beispielhafte Halteeinrichtungen, um den Teleskopgurtförderer 20 in der erreichten Parkposition oder in der erreichten Betriebsposition zu halten.

Das System aus Figuren 1 bis 4 kann in vielfältiger Weise abgewandelt werden, sowohl durch das Weglassen von Komponenten wie auch durch das Hinzufügen von Komponenten. Hierdurch können sich weitere oder alternative Vorteile ergeben.

Die Paketsortieranlage oder einzelne Komponenten der Anlage, insbesondere der dem mindestens einen Teleskopbandförderer 20 zugeordneter Rollenförderer 10, können optional Teil eines Ausführungsbeispiels des erfindungsgemäßen Systems seins.

In bestimmten Ausführungsformen könnten die Führungsschienen 41, 42 auch anders als durch Verschraubung am Boden befestigt werden. In bestimmten Ausführungsformen könnten die Führungsschienen 41, 42 außerdem statt am Boden beispielsweise auch an den Abstützungen 11 des Rollenförderers 10 befestigt werden. Hierdurch lassen sich eine besonders einfache Montage sowie ein einfacher Umbau ermöglichen, wenn die Führungsschienen 41, 42 einem anderen Rollenförderer der gleichen oder einer anderen Anlage zugeordnet werden sollen.

Statt eines Sensors 29, der das Drehmoment des Motors 26 überwacht, könnte auch eine beliebige andere Art von Sensor so angeordnet werden, dass er vorgegebene Positionen des Teleskopförderers 20 relativ zu den Führungselementen 40 erfassen kann. Ein solcher Sensor könnte beispielsweise ähnlich einer Reflex-Lichtschranke ausgebildet sein. Er könnte an dem Teleskopförderer 20 angebracht sein, einen Lichtstrahl aussenden und einen reflektierten Lichtstrahl erfassen, wobei der Lichtstrahl nur reflektiert werden könnte, wenn sich der Sensor gerade über einer Position der Führungselemente 40 befindet, an denen ein hierzu vorgesehener Reflektor angebracht ist.

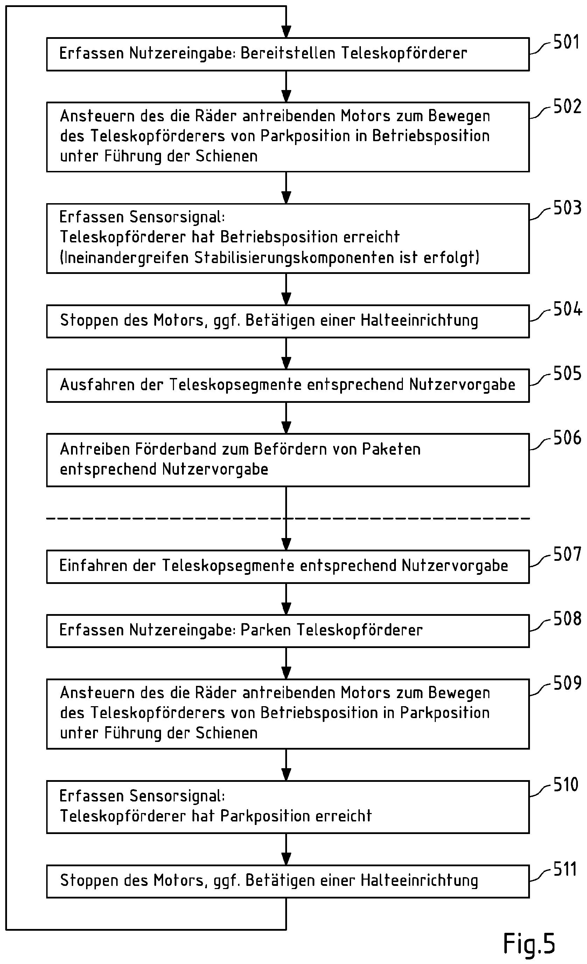

Figur 5 ist ein Ablaufdiagramm, das einen Betrieb in dem in Figuren 1 bis 4 schematisch dargestellten System gemäß einem beispielhaften Ausführungsbeispiel eines erfindungsgemäßen Verfahrens illustriert.

Zunächst befindet sich der Teleskopgurtförderer 20, wie in Figur 1 gezeigt, in seiner Parkposition unter dem Rollenförderer 10.

In Kürze soll nun der Rollenförderer 10 Pakete liefern, die in einen Trailer zu verbringen sind. Der Trailer ist bereits vor dem Rollenförderer 10 abgestellt, mit dem Zugang zur Ladefläche in Richtung der Entnahmestelle des Rollenförderers 10. Für den Transport der Pakete von dem Rollenförderer 10 bis zu verschiedenen Tiefen des Trailers soll der Teleskopgurtförderer 20 genutzt werden.

Eine Bedienperson kann nun eine Eingabe an einem der Bedienelemente 27 vornehmen, das für ein Verfahren des Teleskopgurtförderers 20 aus der Parkposition in die Betriebsposition vorgesehen ist.

Die Steuereinheit 30 erhält ein entsprechendes Signal von dem Bedienelement 27 und erfasst damit die Nutzereingabe. (Aktion 501)

Daraufhin steuert die Steuereinheit 30 den Räder 25 des Teleskopgurtförderers 20 antreibenden Motor 26 so an, dass sich der Teleskopgurtförderer 20 in Förderrichtung des Teleskopgurtförderers 20 von der Parkposition in die Betriebsposition bewegt. (Aktion 502) Die Räder 25 werden dabei von den Führungsschienen 41, 42 geführt.

Wenn der Teleskopgurtförderer 20 die Betriebsposition erreicht, wird er durch das Zusammenwirken zwischen dem Winkel 32 und dem Abstandshalter 45 angehalten und stabilisiert. Der Sensor 29, der das Drehmoment des Motors 26 überwacht, stellt fest, dass das Drehmoment einen vorgegebenen Grenzwert überschreitet und liefert ein entsprechendes Signal an die Steuereinheit 30.

Wenn die Steuereinheit 30 das Signal erhält (Aktion 503), weiß sie, dass der Teleskopgurtförderer 20 die Betriebsposition erreicht hat und veranlasst ein Stoppen des Motors 26 (Aktion 504). Eine ungewollte Rückwärtsbewegung der Räder 25 ist in dieser Position durch die überfahrene Schwelle 48 erschwert. Zusätzlich kann aber bei Bedarf auch eine Feststellbremse betätigt oder eine andere Art der Arretierung vorgenommen werden.

Die Bedienperson kann nun mittels der Bedienelemente 27 veranlassen, dass die Teleskopsegmente 22, 23, 24 auf eine gewünschte Länge ausgefahren werden, zum Beispiel zunächst so weit, dass der hintere Teil des noch leeren Trailers erreicht wird. (Aktion 505) Der Zustand entspricht dann zum Beispiel dem in Figur 3 dargestellten Zustand des Teleskopgurtförderers 20.

Beispielsweise im Trailer kann die Bedienperson nun mittels der Bedienelemente 28 an der Front des vordersten Teleskopsegments 24 das Förderband 31 des Teleskopgurtförderers 20 starten, so dass die von dem Rollenförderer 10 gelieferten Pakete mittels des Teleskopgurtförderers 20 in den Trailer hineinbefördert werden. (Aktion 506) Der Teleskopgurtförderer 20 mit seiner teleskopisch verstellbaren Förderreichweite sorgt somit dafür, dass Pakete nicht vom Bedienpersonal in den Trailer hinein transportiert werden müssen. Eine Bedienperson kann die Pakete vom den Teleskopgurtförderer 20 in Empfang nehmen und sie an der vorgesehenen Stelle im Trailer verstauen.

Während des Verladens kann die Bedienperson bei zunehmendem Ladevolumen im Trailer die Länge des Teleskopgurtförderers 20 in mehreren Schritten verkürzen, indem mittels der Bedienelemente 28 ein Einfahren der Teleskopsegmente 22, 23, 24 veranlasst wird.

Sind alle Pakete verladen, so kann die Bedienperson mittels der Bedienelemente 28 das vollständige Einfahren der Teleskopsegmente 22, 23, 24 veranlassen. (Aktion 507)

Die Aktionen 505 - 507 können beispielsweise ebenfalls mittels der Steuereinheit 30 umgesetzt werden.

Sind in nächster Zeit keine weiteren Pakete oder andere Stückgüter mittels des Teleskopgurtförderers 20 zu befördern, so kann eine Bedienperson nun eine Eingabe an einem der Bedienelemente 27 vornehmen, das für ein Verfahren des Teleskopgurtförderers 20 aus der Betriebsposition zurück in die Parkposition vorgesehen ist.

Die Steuereinheit 30 erhält ein entsprechendes Signal von dem Bedienelement 27 und erfasst damit die Nutzereingabe. (Aktion 508)

Daraufhin steuert die Steuereinheit den Räder 25 des Teleskopgurtförderers 20 antreibenden Motor 26 so an, dass sich der Teleskopgurtförderer 20 entgegen der Förderrichtung des

Teleskopgurtförderers 20 von der Betriebsposition in die Parkposition bewegt. (Aktion 509) Die Räder 25 werden dabei wieder von den Führungsschienen 41, 42 geführt.

Wenn der Teleskopgurtförderer 20 die Parkposition erreicht, wird er gestoppt, wenn die Räder 25 den Abschluss der Rinne der Förderschienen 41, 42 erreichen. Der Sensor 29, der das Drehmoment des Motors 26 überwacht, stellt fest, dass das Drehmoment einen vorgegebenen Grenzwert überschreitet und liefert ein entsprechendes Signal an die Steuereinheit 30.

Wenn die Steuereinheit 30 das Signal erhält (Aktion 510), weiß sie damit, dass der Teleskopgurtförderer 20 die Parkposition erreicht hat und stoppt den Motor 26 (Aktion 511). Eine ungewollte Rückwärtsbewegung der Räder 25 ist in dieser Position durch die überfahrene Schwelle 48 erschwert. Zusätzlich kann aber bei Bedarf auch eine Feststellbremse betätigt oder eine andere Art der Arretierung vorgenommen werden.

Das in Figur 5 illustrierte Verfahren kann mit Aktion 501 fortgesetzt werden, sobald der Teleskopgurtförderer 20 wieder für einen Verladevorgang eingesetzt werden soll.

Es versteht sich, dass das Verfahren in vielerlei Hinsicht abgewandelt werden kann.

Beispielsweise könnte durch das Bedienpersonal zusätzlich eine Höhenverstellung des Endes des Teleskopgurtförderers 20 oder eine Schwenkung des Teleskopgurtförderers 20 veranlasst werden, während sich der Teleskopgurtförderer 20 in der Betriebsposition befindet.

Außerdem könnte ein System aus Teleskopförderer und Führungselementen für eine Vielzahl von anderen Einsatzzwecken vorgesehen werden. So könnte ein solches System auch genutzt werden, um Pakete oder andere Stückgüter von der Ladefläche eines Lastkraftwagens oder Trailers einer Fördereinrichtung einer Anlage für eine Weiterverarbeitung, wie ein Sortieren zum Zweck der Auslieferung, zuzuführen.

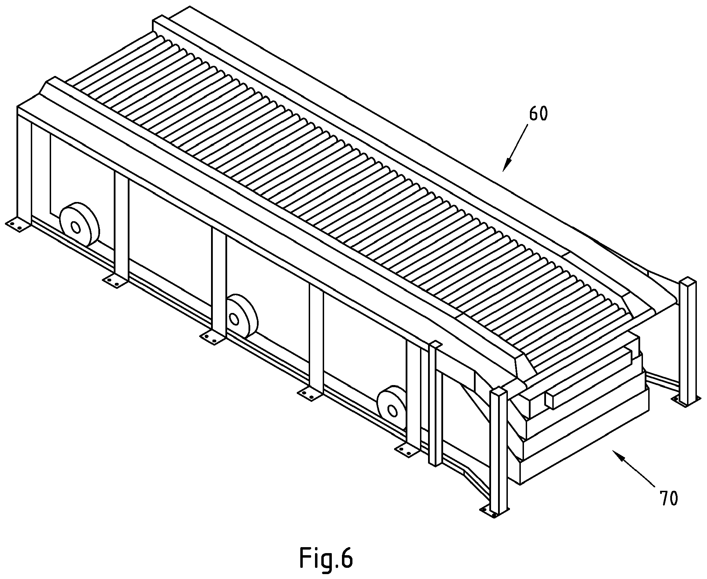

Figuren 6 bis 11 sind schematische Darstellungen einer zweiten beispielhaften Ausführungsform eines erfindungsgemäßen Systems.

Das System umfasst wiederum einen Teleskopgurtförderer 70 und Führungselemente, die unter einer Fördereinrichtung 60 einer Anlage ortsfest angebracht sind. Die Fördereinrichtung 60 oder die ganze Anlage können wieder optional Teil des Systems sein. Die Fördereinrichtung 60 kann beispielsweise wieder ein Rollenförderer sein; sie kann aber auch eine beliebige andere Fördertechnik verwenden, wie beispielsweise ebenfalls ein Förderband.

In Figur 6 ist der Teleskopgurtförderer 70 in einer Parkposition dargestellt. Der Teleskopgurtförderer 70 weist Räder auf, und er kann unter Führung von Führungselementen wiederum zwischen der Parkposition und einer Betriebsposition vor der Fördereinrichtung 60 hin und her bewegt werden. In diesem Fall verschwindet der Teleskopgurtförderer 70 in der Parkposition aber vollständig unter der Fördereinrichtung 60. Dies kann den Effekt haben, dass besonders viel freie Fläche für andere Zwecke zur Verfügung steht.

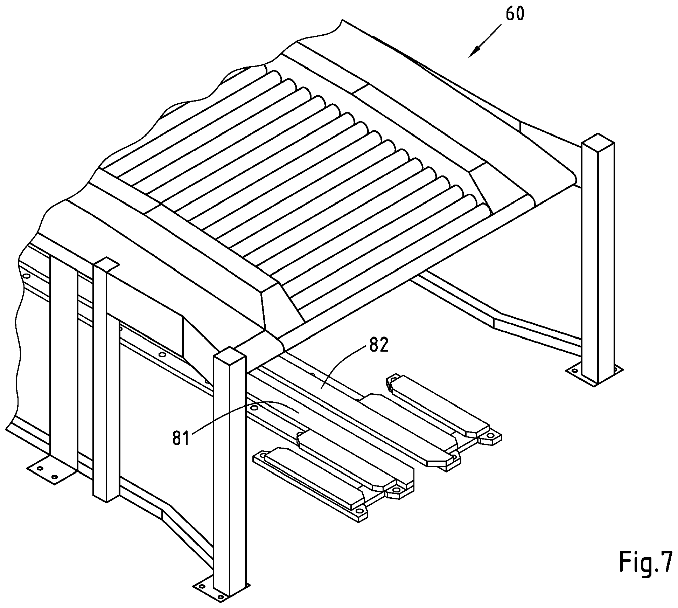

In Figur 7 sind die Führungselemente und ihre Anordnung unter der Fördereinrichtung 60 in dem zweiten Ausführungsbeispiel dargestellt. Bei den Führungselementen handelt sich in diesem Fall beispielhaft um zwei Führungsschienen 81, 82, die mittig unter der Fördereinrichtung 60 angeordnet sind, die im Wesentlichen parallel zueinander in Längsrichtung der Fördereinrichtung 60 verlaufen und die etwa mit dem vorderen Ende der Fördereinrichtung 60 enden.

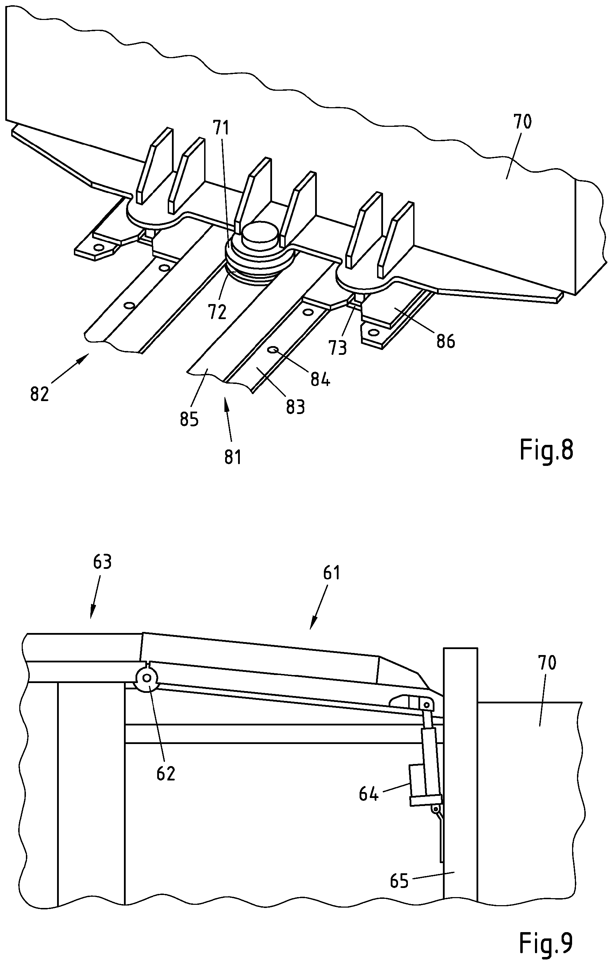

Figur 8 zeigt Details des vorderen Bereichs der Führungsschienen 81, 82 sowie deren Zusammenwirken mit dem Teleskopförderer 70.

Jede der Schienen 81, 82 weist in einer Schnittansicht die Form eines doppelten Winkels auf, wobei eine erste Fläche 83 des doppelten Winkels mit freier Kante eine Befestigungskomponente darstellt und beispielsweise mittels Schrauben am Boden befestigt ist. Hierzu können mehrere Bohrungen 84 durch die erste Fläche 83 vorgesehen sein. Die zweite Fläche 85 des doppelten Winkels mit freier Kante befindet sich dadurch planparallel zum Boden mit einem kleinen Abstand von diesem und bildet den eigentlichen Führungskörper. Die freien Kanten der Führungskörper 85 der beiden Führungsschienen 81, 82 sind einander zugewandt. Die Führungsschienen 81, 82 weisen an ihrem einen, in Figur 8 gezeigten Ende auf den einander abgewandten Seiten einen Außenteil 86 einer jeweiligen Schiebeverbindung als Teil einer Begrenzungs- und/oder Stabilisierungseinrichtung auf.

Der Teleskopförderer 70 weist am hinteren Ende mittig ein horizontal und knapp über dem Boden angeordnetes Führungsrad 71 auf. Die Befestigung des Führungsrades 71 und das Führungsrad 71 selber verlängern den eigentlichen Teleskopförderer 70 dabei leicht nach hinten, d.h. sie sind zum Beispiel an einem Tragegerüst des Teleskopförderers 70 befestigt. Die Lauffläche des Führungsrads 71 ist ringsum mit einer Nut 72 versehen. Der Teleskopförderer 70 weist ferner am hinteren Ende auf beiden Seiten des Führungsrads 71 einen jeweiligen Innenteil 73 für eine der Schiebeverbindungen auf.

Der Teleskopförderer 70 ist so platziert, dass sich das Führungsrad 71 zwischen den Führungsschienen 81, 82 befindet und die Führungskörper 85 der beiden Führungsschienen 81, 82 von beiden Seiten in die Nut 72 eingreifen. Der Abstand der offenen Kanten der Führungskörper 85 zueinander ist dabei geringfügig größer als der Durchmesser des Führungsrades 71 im Bereich der Nut 72, so dass sich die Lauffläche des Führungsrades 71 am Nutgrund stets nur in Kontakt mit einem der Führungskörper 85 befinden kann.

Der Teleskopgurtförderer 70 wird bei einer Bewegung von der Parkposition in die Betriebsposition und umgekehrt mittels des Führungsrads 71 von den Schienen 81, 82 geradlinig geführt. Die Parkposition ist erreicht, wenn sich das vordere Ende des Teleskopgurtförderers 70, wie in Figur 6 gezeigt, im Wesentlichen auf gleicher Höhe befindet wie das vordere Ende der Fördereinrichtung 60. Die Betriebsposition ist erreicht, wenn sich das hintere Ende des Tragegerüsts des Teleskopförderers 70 unmittelbar vor dem vorderen Ende der Fördereinrichtung 60 befindet. Da das Führungsrad 71 im Vergleich zum Tragegerüst nach hinten übersteht, befindet es sich gerade noch zwischen den Schienen 81, 82. Eine unbeabsichtigte Bewegung des Teleskopgurtförderers 70 über die Betriebsposition hinaus wird verhindert, indem der Innenteil 73 für die jeweilige Schiebeverbindung am Teleskopgurtförderer 70 mit dem Außenteil 86 für die jeweilige Schiebeverbindung an den Schienen 81, 82 in Eingriff kommt. Der jeweilige Außenteil 86 ist auf der der Fördereinrichtung 60 abgewandten Seite geschlossen und stoppt die Bewegung des Teleskopgurtförderers 70, sobald der Innenteil 73 das geschlossene Ende erreicht. Gleichzeitig könnten die Schiebeverbindungen 73, 86 den Teleskopgurtförderer 70 im Betrieb stabilisieren, indem sie ein Kippen des Teleskopgurtförderer 70 nach vorne verhindern.

Wird der Teleskopgurtförderers 70 in die Betriebsposition gebracht, so ist das an die Fördereinrichtung 60 angrenzende hintere Ende des Teleskopgurtförderers 70 niedriger als das an den Teleskopgurtförderers 70 angrenzende vordere Ende der Fördereinrichtung 60. Damit für transportierte Stückgüter ein versatzfreier Übergang zwischen Fördereinrichtung 60 und Teleskopgurtförderer 70 bereitgestellt werde kann, ist die Fördereinrichtung 60 so ausgestaltet, dass die Vorderkante des vorderen Endes abgesenkt werden kann,

Figur 9 zeigt zur Veranschaulichung bespielhafte Details der Fördereinrichtung 60 zur Ermöglichung einer solchen Absenkung.

Ein vorderer Bereich 61 der Fördereinrichtung 60 ist hierzu mittels eines Lagers 62 mit dem hinteren Bereich 63 der Fördereinrichtung 60 verbunden. Das Lager könnte einfache Scharniere umfassen, oder beispielsweise ein Radiallager mit axial ausgedehnter Welle. Der vordere Bereich 61 ist im Bereich seiner Vorderkante außerdem mit einem Aktor 64 verbunden, der die Vorderkante des vorderen Bereichs 61 bei Bedarf absenken und anheben kann. Der Aktor 64 könnte fest an einer an einer seitlichen Abstützung 65 der Fördereinrichtung 60 montiert sein. Der Aktor 64 könnte beispielsweise einen Linearmotor, wie einen hydraulischen Linearmotor, umfassen.

In der in Figur 9 dargestellten Situation befindet sich der Teleskopförderer 70 in seiner Betriebsposition, und die Vorderkante des vorderen Bereichs 61 der Fördereinrichtung 60 wurde bereits soweit abgesenkt, dass sich ein im Wesentlichen stufenloser Übergang zwischen der Transportfläche der Fördereinrichtung 60 und Transportfläche des Teleskopförderers 70 ergibt.

Die niedrige Bauhöhe des Teleskopförderers 70, die das Verstauen des Teleskopförderers 70 unter der Fördereinrichtung 60 erst ermöglicht, hat zusätzlich den Effekt, dass das vordere Ende, an dem das Bedienpersonal mit einem Be- oder Entladen des Teleskopförderers 70 beschäftigt ist, eine unbequem niedrige Arbeitshöhe aufweist.

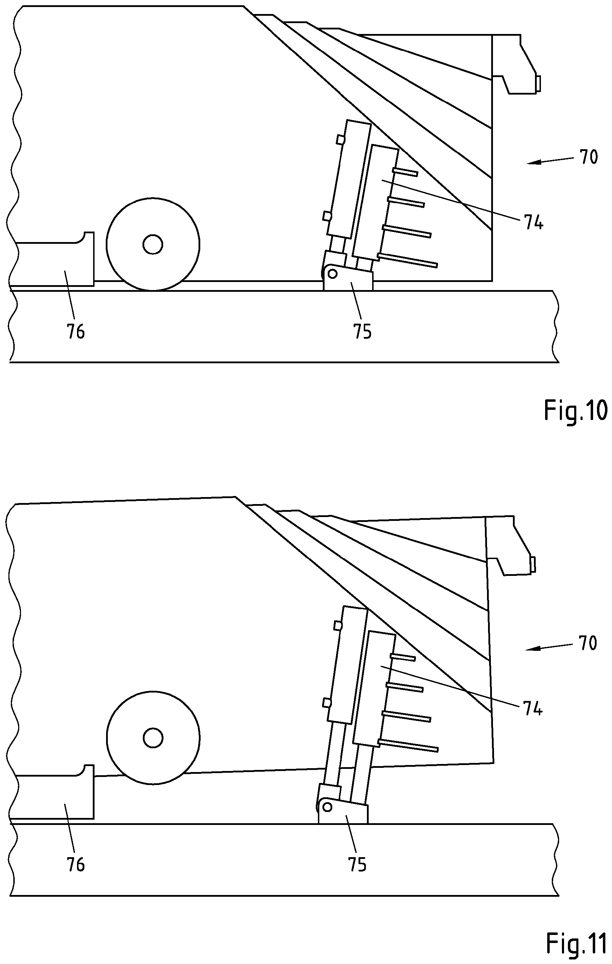

Figuren 10 und 11 zeigen schematisch einen Ansatz, um das vordere, der Fördereinrichtung 60 gegenüber liegende Ende des Teleskopförderers 70 für den Betrieb auf eine ergonomisch sinnvolle Höhe zu bringen. Beide Figuren zeigen das vordere Ende des Teleskopförderers 70. Der Teleskopförderer 70 befindet sich in Betriebsposition, aber die Teleskopsegmente sind (noch) eingefahrenen.

An einer Seitenwand des Tragegerüsts des Teleskopförderers 70 sind zwei Hydraulikzylinder 74 montiert. Derartige Hydraulikzylinder 74 könnten nur auf einer Seite oder symmetrisch auf beiden Seiten des Teleskopförderers 70 angebracht sein.

In Figur 10 befinden sich die Hydraulikzylinder 74 in einem ersten Zustand, in dem sich die Kolben jeweils vollständig in den zugehörigen Zylindern befinden. Die Oberfläche des Teleskopförderers 70 verläuft in diesem Zustand im Wesentlichen horizontal auf durchgehend niedriger Höhe. Das untere Ende der Hydraulikzylinder 74 ist mit einem Abstützelement 75 verbunden, das in diesem Zustand einen kleinen Abstand zum Boden aufweist, damit es den Teleskopförderer 70 beim Verfahren zwischen Parkposition und Betriebsposition nicht behindert.

In Figur 11 befinden sich die Hydraulikzylinder 74 in einem zweiten Zustand, in dem die Kolben jeweils maximal aus den zugehörigen Zylindern ausgefahren wurden. Die Oberfläche des Teleskopförderers 70 verläuft in diesem Zustand ansteigend von dem der Fördereinrichtung 60 zugewandten, hinteren Ende zu dem gegenüberliegenden vorderen Ende. Eine erste, kurze Ausfahrlänge dient dazu, das Abstützelement 75 in Kontakt mit dem Boden zu bringen. Sobald der Kontakt mit dem Boden vorhanden ist, dient das weitere Ausfahren dem Anheben des vorderen Endes des Teleskopförderers 70. Es versteht sich, dass die Höhe des Anhebens variabel sein kann. So kann beispielsweise bei verschiedenen Ausfahrsituationen der Teleskopsegmente des Teleskopförderers 70 stets eine gleiche, ergonomisch sinnvolle Höhe am Ende des Teleskopförderers 70 erzielt werden. Die Ausfahrhöhe der Hydraulikzylinder 74 könnte in beispielhaften Ausführungsformen auch automatisch an die jeweilige Ausfahrlänge des Teleskopförderers 70 gekoppelt werden.

Der Winkel der Hydraulikzylinder 74 ist derart gewählt, dass das vordere Ende des Teleskopförderers 70 sich hebt, ohne dass die Höhe des hinteren Endes Teleskopförderers 70 wesentlich verändert wird, damit letzteres sich weiterhin auf der Höhe der Fördereinrichtung 60 befindet. Hierzu könnte der Teleskopförderer 70 auch einen Rahmenteil 76 aufweisen, in dem der übrige Teil des Teleskopförderers 70 kippbar gelagert ist, der aber selber von den Hydraulikzylindern 74 nicht bewegt wird. Die Befestigungskomponenten für das Führungsrad 71 und für die Innenteile 73 für die Schiebeverbindungen könnten dann an dem Rahmenteil 76 des Teleskopförderers 70 angebracht sein, so dass der Rahmenteil 76, das Führungsrad 71 und die Innenteile 73 unabhängig von dem Betriebszustand der Hydraulikzylinder 74 stets im Wesentlichen den gleichen Winkel zum Erdboden aufweisen können. Der Rahmenteil 76 könnte dabei als Teil eines Tragegerüsts des Teleskopförderers 70 oder als ein weiteres Element angesehen werden.

Alternativ zu den Ansätzen aus Figuren 9 bis 11 könnte auch der gesamte Teleskopförderer 70 in der Betriebsposition - zum Beispiel hydraulisch - angehoben werden, um sowohl ein Angleichen an das Niveau der Fördereinrichtung 60 sowie eine ergonomische Arbeitshöhe zu erreichen. Dies könnte den Vorteil bieten, dass die Fördereinrichtung 60 nicht angepasst werden braucht. Auch in dieser Alternative könnte eine Führung des Teleskopförderers 70 zwischen Park- und Betriebsposition ähnlich wie in der in Figur 8 dargestellten beispielhaften Ausführungsform eingesetzt werden. Der Teleskopförderer 70 könnte dann einen von der Höhenverstellung nicht betroffenen Rahmen aufweisen, innerhalb dem der Rest des Teleskopförderers 70 angehoben wird. Die Befestigungskomponenten für das Führungsrad 71 und für die Innenteile 73 für die Schiebeverbindungen könnten dann an diesem Rahmenteil des Teleskopförderers 70 angebracht sein.

Es kann vorgesehen sein, dass der Teleskopgurtförderer 70 von dem Bedienpersonal manuell zwischen der Parkposition und der nicht dargestellten Betriebsposition bewegt wird. Ein separater Motor, Bedienelemente und eine Steuereinheit für das Bewegen des Teleskopgurtförderers 70 zwischen den Positionen wären in dem Fall nicht erforderlich. Es versteht sich allerdings, dass auch für den Teleskopgurtförderer 70 eine motorgetriebene Bewegung zwischen den Positionen vorgesehen werden kann.

In anderen beispielhaften Ausführungsformen kann eine von mindestens einem Führungselement definierte Betriebsposition unmittelbar vor einer Fördereinrichtung nur eine von vielen möglichen Betriebspositionen sein. Bei Bedarf kann ein Teleskopgurtförderer in diesen Ausführungsformen auch zu anderen, von dem mindestens einen Führungselement und der Fördereinrichtung unabhängigen Betriebspositionen bewegt werden.

Die dargestellten oder beschriebenen Verbindungen zwischen Komponenten sind als funktionale Verbindungen zu verstehen. Sie können direkt oder indirekt über mehrere andere Komponenten realisiert werden. Die Abfolge der geschilderten Aktionen in dem Ablaufdiagramm ist nicht zwingend; alternative Abfolgen der Verfahrensschritte sind denkbar. Die Aktionen können auf verschiedene Art und Weise implementiert werden.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. System umfassend eine ortsfeste Fördereinrichtung (10; 60) einer ortsfesten Anlage, einen Teleskopförderer (20; 70) und mindestens ein Führungselement (40; 81, 82),
- wobei das mindestens eine Führungselement (40; 81, 82) Befestigungskomponenten (43; 83) aufweist, die dazu eingerichtet sind, das mindestens eine Führungselement (40; 81, 82) an einem Ort zu fixieren, und
- wobei der Teleskopförderer (20; 70) und das mindestens eine Führungselement (40; 81, 82) derart zusammenwirkend ausgebildet sind, dass der Teleskopförderer (20; 70) von dem mindestens einen Führungselement (40; 81, 82) geführt in und/oder gegen Förderrichtung des Teleskopförderers (20; 70) zwischen einer Parkposition und einer Betriebsposition des Teleskopförderers (20; 70) bewegbar ist,
**dadurch gekennzeichnet, dass**
das mindestens eine Führungselement (40; 81, 82) mittels der Befestigungskomponenten (43; 83) derart unter der Fördereinrichtung (10; 60) fixiert ist, dass der Teleskopförderer (20; 70) zum Erreichen seiner Parkposition zumindest zum größeren Teil unter die Fördereinrichtung (10; 60) bewegbar ist.

2. System gemäß Anspruch 1, wobei der Teleskopförderer (20) Räder (25) aufweist, und wobei das mindestens eine Führungselement (40) mindestens eine Schiene (41, 42) zum Führen des Teleskopförderers (20) aufweist.

3. System gemäß Anspruch 1 oder 2, wobei der Teleskopförderer (70) ein durch das mindestens eine Führungselement (81, 82) führbares Führungsrad (71) aufweist, das
- in einem hinteren Bereich des Teleskopförderers (70) angeordnet ist und/oder
- mittig zum Teleskopförderer (70) angeordnet ist und/oder
- horizontal ausgerichtet ist und/oder
- zwischen zwei als das mindestens eine Führungselement fungierenden Schienen (81, 82) geführt wird.

4. System gemäß einem der Ansprüche 1 bis 3, wobei der Teleskopförderer (70) Mittel (74) zur Höhenverstellung eines vorderen Endes des Teleskopförderers (70) unter Beibehaltung einer Höhe eines hinteren Endes des Teleskopförderers (70) aufweist.

5. System gemäß einem der Ansprüche 1 bis 4, wobei der Teleskopförderer (20) Räder (25) und mindestens einen Motor (26) zum Antreiben mindestens eines der Räder (25) aufweist und wobei das System mindestens eine Steuereinheit (30) aufweist, die dazu eingerichtet ist, auf eine Nutzereingabe hin den mindestens einen Motor (26) zu steuern.

6. System gemäß einem der Ansprüche 1 bis 5, das ferner
- mindestens eine Komponente (47, 45, 32) zur mechanischen Begrenzung der Bewegung des Teleskopförderers (20) über die Parkposition und/oder über die Betriebsposition hinaus und/oder
- mindestens eine Halteeinrichtung (47, 32, 45, 48) zum Halten des Teleskopförderers (20) in der Parkposition und/oder in der Betriebsposition des Teleskopförderers (20) aufweist umfasst.

7. System gemäß einem der Ansprüche 1 bis 6, das ferner mindestens einen Sensor (29) umfasst, der dazu angeordnet ist, ein Erreichen der Parkposition und/oder der Betriebsposition des Teleskopförderers (20) zu erfassen.

8. System gemäß einem der Ansprüche 1 bis 7, bei dem die Fördereinrichtung (10; 60) seitliche Abstützungen (11) aufweist, die einen Freiraum unter der Fördereinrichtung (10, 60) lassen, wobei das mindestens eine Führungselement an den Abstützungen (11) der Fördereinrichtung (10, 60) befestigt ist.

9. System gemäß einem der Ansprüche 1 bis 8, wobei der Teleskopförderer (20) und das mindestens eine Führungselement (40) zusammenwirkende Stabilisierungskomponenten (32, 45) für eine Stabilisierung des Teleskopförderers (20) beim Betrieb des Teleskopförderers (20) in einer Betriebsposition aufweisen, wobei die Stabilisierungskomponenten (32, 45) eingerichtet sind, um ein Kippen des Teleskopförderers (20) in Ausfahrrichtung des Teleskopförderers (20) zu verhindern.

10. System gemäß einem der Ansprüche 1 bis 9, wobei der Teleskopförderer (20) ein Tragegerüst (21) und mehrere teleskopartig ausfahrbare Teleskopsegmente (22, 23, 24) umfasst, und wobei sich das Tragegerüst (21) des Teleskopförderers (20) in der Betriebsposition des Teleskopförderers (20) zumindest zum größeren Teil vor der Fördereinrichtung (60) befindet.

11. System gemäß einem der Ansprüche 1 bis 10, wobei das mindestens eine Führungselement mindestens eine Schiene (81, 82) umfasst, die mittig unter der Fördereinrichtung (60) fixiert ist und sich längs der Förderrichtung der Fördereinrichtung (60) erstreckt.

12. System gemäß einem der Ansprüche 1 bis 11, wobei sich der Teleskopförderer (70) in seiner Betriebsposition zumindest zum größeren Teil vor der Fördereinrichtung (60) befindet, wobei die Fördereinrichtung (60) eine erste Förderhöhe aufweist, die höher ist als eine Förderhöhe des Teleskopförderers (70) in seiner Betriebsposition in einem an die Fördereinrichtung (60) angrenzenden Bereich, und wobei die Fördereinrichtung (60) ein vorderes Ende aufweist, das auf eine zweite Förderhöhe absenkbar ist, die der Förderhöhe des Teleskopförderer (70) in dem an die Fördereinrichtung (60) angrenzenden Bereich entspricht.

13. System gemäß Anspruch 12, wobei die Fördereinrichtung (60) mindestens einen Aktor (64) aufweist, und wobei das vordere Ende der Fördereinrichtung (60) mittels des Aktors (64) auf die zweite Förderhöhe absenkbar ist.

14. System gemäß einem der Ansprüche 1 bis 13, wobei
- die ortsfeste Anlage eine Sortieranlage ist, und/oder
- die ortsfeste Anlage eine Codieranlage ist, und/oder
- die Fördereinrichtung eine Zuführeinrichtung (10) umfasst.

15. Verfahren zur Nutzung eines System, wobei das System eine ortsfeste Fördereinrichtung (10; 60) einer ortsfesten Anlage, einen Teleskopförderer (20) und mindestens ein Führungselement (40) aufweist und wobei das mindestens eine Führungselement (40) mittels Befestigungskomponenten (43) an einem Ort fixiert ist, das Verfahren umfassend:
- Bewegen des Teleskopförderers (20) in oder gegen Förderrichtung des Teleskopförderers (20) von einer Parkposition in eine Betriebsposition unter Führung des Teleskopförderers (20) durch das mindestens eine Führungselement (40), um einen Betrieb des Teleskopförderers (20) zu ermöglichen, und/oder
- Bewegen des Teleskopförderers (20) in oder gegen Förderrichtung des Teleskopförderers (20) von einer Betriebsposition in eine Parkposition unter Führung des Teleskopförderers (20) durch das mindestens eine Führungselement (40), um einen Raum freizugeben, der von dem Teleskopförderer (20) in der Betriebsposition belegt wird,
**dadurch gekennzeichnet, dass**
das mindestens eine Führungselement (40; 81, 82) mittels der Befestigungskomponenten (43; 83) derart unter der Fördereinrichtung (10; 60) fixiert ist, dass der Teleskopförderer (20; 70) zum Erreichen seiner Parkposition zumindest zum größeren Teil unter die Fördereinrichtung (10; 60) bewegbar ist.

## Claims

1. System comprising a locally fixed conveying arrangement (10; 60) of a fixed installation, a telescopic conveyor (20; 70) and at least one guiding element (40; 81, 82),
- wherein the at least one guiding element (40; 81, 82) comprises securing components (43, 83) which are configured to fix the at least one guiding element (40; 81, 82) at a location, and
- wherein the telescopic conveyor (20; 70) and the at least one guiding element (40; 81, 82) are configured to cooperate with each other in such a manner that the telescopic conveyor (20; 70) is movable, guided by the at least one guiding element (40; 81, 82), in and/or counter to the conveying direction of the telescopic conveyor (20; 70) between a parking position and an operating position of the telescopic conveyor (20; 70),
**characterized in that**
the at least one guiding element (40; 81, 82) is fixed by means of the securing components (43; 83) below the conveying arrangement (10; 60) in such a manner that the telescopic conveyor (20; 70), for reaching its parking position, is moveable at least for the most part below the conveying arrangement (10; 60).

2. System according to claim 1, wherein the telescopic conveyor (20) comprises wheels (25) and wherein the at least one guiding element (40) comprises at least one rail (41, 42) for guiding the telescopic conveyor (20).

3. System according to claim 1 or 2, wherein the telescopic conveyor (70) comprises a guiding wheel (71) which can be guided by the at least one guiding element (81, 82) and which
- is arranged in a rear region of the telescopic conveyor (70) and/or
- is arranged centrally relative to the telescopic conveyor (70) and/or
- is orientated horizontally and/or
- is guided between two rails (81, 82) which act as the at least one guiding element.

4. System according to any one of claims 1 to 3, wherein the telescopic conveyor (70) comprises means (74) for height adjustment of a front end of the telescopic conveyor (70), with a height of a rear end of the telescopic conveyor (70) being maintained.

5. System according to any one of claims 1 to 4, wherein the telescopic conveyor (20) comprises wheels (25) and at least one motor (26) for driving at least one of the wheels (25) and wherein the system comprises at least one control unit (30) which is configured to control the at least one motor (26) in response to a user input.

6. System according to any one of claims 1 to 5, which further comprises
- at least one component (47, 45, 32) for mechanical limitation of the movement of the telescopic conveyor (20) beyond the parking position and/or the operating position and/or
- at least one retention arrangement (47, 32, 45, 48) for retaining the telescopic conveyor (20) in the parking position and/or in the operating position of the telescopic conveyor (20).

7. System according to any one of claims 1 to 6, which further comprises at least one sensor (29) which is arranged to detect that the parking position and/or the operating position of the telescopic conveyor (20) has been reached.

8. System according to any one of claims 1 to 7, wherein the conveying arrangement (10; 60) comprises lateral supports (11), which leave a free space below the conveying arrangement (10; 60), and wherein the at least one guiding element is secured to the supports (11) of the conveying arrangement (10; 60).

9. System according to any one of claims 1 to 8, wherein the telescopic conveyor (20) and the at least one guiding element (40) comprise cooperating stabilizing components (32, 45) for stabilizing the telescopic conveyor (20) when the telescopic conveyor (20) is operated in an operating position, wherein the stabilizing components (32, 45) are configured to prevent a tilting of the telescopic conveyor (20) in direction of extension of the telescopic conveyor (20).

10. System according to any one of claims 1 to 9, wherein the telescopic conveyor (20; 70) comprises a carrier frame (21) and a plurality of telescopic segments (22, 23, 24), and wherein the carrier frame (21) of the telescopic conveyor (20) is located in the operating position of the telescopic conveyor (20) at least for the most part in front of the conveying arrangement (60).

11. System according to any one of claims 1 to 10, wherein the at least one guiding element comprises at least one rail (81, 82) which is fixed centrally below the conveying arrangement (60) and which extends along the conveying direction of the conveying arrangement (60).

12. System according to any one of claims 1 to 11, wherein the telescopic conveyor (70) is located in the operating position thereof at least for the most part in front of the conveying arrangement (60), wherein the conveying arrangement (60) has a first conveying height which is higher than a conveying height of the telescopic conveyor (70) in the operating position thereof in a region adjoining the conveying arrangement (60), and wherein the conveying arrangement (60) has a front end which can be lowered to a second conveying height which corresponds to the conveying height of the telescopic conveyor (70) in the region adjoining the conveying arrangement (60).

13. System according to claim 12, wherein the conveying arrangement (60) comprises at least one actuator (64) and wherein the front end of the conveying arrangement (60) can be lowered to the second conveying height by means of the actuator (64).

14. System according to any one of claims 1 to 13, wherein
- the fixed installation is a sorting installation and/or
- the fixed installation is an encoding installation, and/or
- the conveying arrangement comprises a supply arrangement (10).

15. Method for using a system, wherein the system comprises a locally fixed conveying arrangement (10; 60) of a fixed installation, a telescopic conveyor (20) and at least one guiding element (40) and wherein the at least one guiding element (40) is fixed at a location by means of securing components (43), the method comprising:
- moving the telescopic conveyor (20) in or counter to the conveying direction of the telescopic conveyor (20) from a parking position into an operating position with the telescopic conveyor (20) being guided by the at least one guiding element (40) in order to enable operation of the telescopic conveyor (20), and/or
- moving the telescopic conveyor (20) in or counter to the conveying direction of the telescopic conveyor (20) from an operating position into a parking position with the telescopic conveyor (20) being guided by the at least one guiding element (40) in order to clear a space which is occupied by the telescopic conveyor (20) in the operating position,
**characterized in that**
the at least one guiding element (40; 81, 82) is fixed by means of the securing components (43; 83) below the conveying arrangement (10; 60) in such a manner that the telescopic conveyor (20; 70), for reaching its parking position, is moveable at least for the most part below the conveying arrangement (10; 60).

## Revendications

1. Système doté d'un dispositif de transport (10; 60) fixe, d'une installation fixe, un convoyeur télescopique (20; 70) et au moins un élément de guidage (40; 81, 82),
- sachant que l'au moins un élément de guidage (40 ; 81, 82) est doté de composants de fixation (43; 83), qui sont conçus pour fixer l'au moins un élément de guidage (40 ; 81, 82) à un endroit, et
- sachant que le convoyeur télescopique (20; 70) et l'au moins un élément de guidage (40 ; 81, 82) sont conçus de manière à ce qu'ils coopèrent ensemble, que le convoyeur télescopique (20; 70), guidé par l'au moins un élément de guidage (40 ; 81, 82), puisse être déplacé dans et/ou contre la direction de transport du convoyeur télescopique (20; 70), entre une position de stationnement et une position de travail du convoyeur télescopique (20; 70),
**caractérisé en ce que**
l'au moins un élément de guidage (40 ; 81, 82) est fixé sous le dispositif de transport (10; 60), au moyen des composants de fixation (43; 83), de manière à ce que le convoyeur télescopique (20; 70) puisse être déplacé au moins en majeure partie sous le dispositif de transport (10; 60), pour atteindre sa position de stationnement.

2. Système selon la revendication 1, sachant que le convoyeur télescopique (20) est doté de roues (25) et sachant que l'au moins un élément de guidage (40) est doté d'au moins un rail (41, 42) pour guider le convoyeur télescopique (20).

3. Système selon la revendication 1 ou 2, sachant que le convoyeur télescopique (70) est doté d'une roue de guidage (71) qui, pouvant être guidée par l'au moins un élément de guidage (81, 82),
- est disposée dans une section arrière du convoyeur télescopique (70) et / ou
- est disposée centralement par rapport au convoyeur télescopique (70) et / ou
- est orientée horizontalement et / ou
- est guidée entre deux rails (81, 82), qui assument la fonction d'un élément de guidage.

4. Système selon l'une des revendications 1 à 3, sachant que le convoyeur télescopique (70) est doté de moyens (74) pour le réglage en hauteur d'une extrémité avant du convoyeur télescopique (70) tout en maintenant une hauteur d'une extrémité arrière du convoyeur télescopique (70).

5. Système selon l'une des revendications 1 à 4, sachant que le convoyeur télescopique (20) est doté de roues (25) et d'au moins un moteur (26) pour l'entraînement d'au moins l'une des roues (25) et sachant que le système est doté d'au moins une unité de commande (30), qui est destinée à commander l'au moins un moteur (26) en raison de l'introduction d'un ordre de l'utilisateur.

6. Système selon l'une des revendications 1 à 5, qui comprend de plus
- au moins un composant (47, 45, 32) pour la limitation mécanique du mouvement du convoyeur télescopique (20) au-delà de la position de stationnement et / ou au de-là de la position de travail du convoyeur télescopique (20),
- au moins un dispositif de retenue (47, 32, 45, 48), qui est destiné à maintenir le convoyeur télescopique (20) dans la position de stationnement et / ou dans la position de travail du convoyeur télescopique (20).

7. Système selon l'une des revendications 1 à 6, qui comprend de plus au moins un détecteur (29) qui est disposé de manière à saisir une atteinte de la position de stationnement et / ou de la position de travail du convoyeur télescopique (20).

8. Système selon l'une des revendications 1 à 7, dans lequel le dispositif de transport (10; 60) est doté de supports latéraux (11), qui laissent un espace libre sous le dispositif de transport (10; 60), sachant que l'au moins un élément de guidage est fixé sur les supports (11) du dispositif de transport (10; 60).

9. Système selon l'une des revendications 1 à 8, sachant que le convoyeur télescopique (20) et l'au moins un élément de de guidage (40) sont dotés de composants de stabilisation (32, 45), qui coopèrent ensemble pour stabiliser le convoyeur télescopique (20) pendant le fonctionnement du convoyeur télescopique (20) dans une position de travail, sachant que les composants de stabilisation (32, 45) sont conçus pour empêcher le convoyeur télescopique (20) de basculer dans la direction de déploiement du convoyeur télescopique (20).

10. Système selon l'une des revendications 1 à 9, sachant que le convoyeur télescopique (20) est doté d'une charpente de support (21) et de plusieurs segments télescopiques (22, 23, 24), et sachant que la charpente de support (21) du convoyeur télescopique (20), dans la position de travail du convoyeur télescopique (20), se trouve, au moins en majeure partie, en amont du dispositif de transport (60).

11. Système selon l'une des revendications 1 à 10, sachant que l'au moins un élément de guidage comprend au moins un rail (81, 82), qui est fixé centralement sous le dispositif de transport (60) et qui s'étend le long de la direction de transport du dispositif de transport (60).

12. Système selon l'une des revendications 1 à 11, sachant que le convoyeur télescopique (70), dans sa position de travail, se trouve, au moins en majeure partie, en amont du dispositif de transport (60), sachant que le dispositif de transport (60) présente une première hauteur de transport, qui est supérieure à une hauteur de transport du convoyeur télescopique (70) dans sa position de travail, dans une zone adjacente au dispositif de transport (60), et sachant que le dispositif de transport (60) est dotée d'une extrémité avant, qui peut être abaissée à une deuxième hauteur de transport, qui correspond à la hauteur de transport du convoyeur télescopique (70) dans la zone adjacente au dispositif de transport (60).

13. Système selon la revendication 12, sachant que le dispositif de transport (60) est doté d'au moins un actionneur (64) et sachant que l'extrémité avant du dispositif de transport (60) peut être abaissée à la deuxième hauteur de transport au moyen de l'actionneur (64).

14. Système selon l'une des revendications 1 à 13, sachant
- que le dispositif fixe est une installation de tri et / ou
- que le dispositif fixe est une installation de codage et / ou
- que le dispositif de transport est doté d'un dispositif d'alimentation (10).

15. Procédé de mise en oeuvre d'un système, sachant que le système est doté d'un dispositif de transport (10; 60) fixe d'une installation fixe, d'un convoyeur télescopique (20) et d'au moins un élément de guidage (40), et sachant que l'au moins un élément de guidage (40) est fixé à un endroit au moyen de composants de fixation (43), le procédé comprenant :
- le déplacement du convoyeur télescopique (20) dans et/ou contre la direction de transport du convoyeur télescopique (20), d'une position de stationnement à une position de travail, en guidant le convoyeur télescopique (20) au moyen de l'au moins un élément de guidage (40), pour permettre la mise en oeuvre du convoyeur télescopique (20), et / ou
- le déplacement du convoyeur télescopique (20) dans et/ou contre la direction de transport du convoyeur télescopique (20), d'une position de stationnement à une position de travail, en guidant le convoyeur télescopique (20) au moyen de l'au moins un élément de guidage (40), pour libérer un espace, occupé par le convoyeur télescopique (20) dans la position de travail,
**caractérisé en ce que** l'au moins un élément de guidage (40 ; 81, 82) est fixé sous le dispositif de transport (10; 60), au moyen des composants de fixation (43; 83), de manière à ce que le convoyeur télescopique (20; 70) puisse être déplacé au moins en majeure partie sous le dispositif de transport (10; 60), pour atteindre sa position de stationnement.
